# EUROPEAN PATENT APPLICATION

(11) **EP 2 696 532 A2**
(43) Date of publication of application: **12.02.2014**
(21) Application number: 11768471.2
(22) Date of filing: 18.05.2011
(51) Int. Cl.: H04L 12/16

(54) **METHOD, SERVER AND SYSTEM FOR STARTING APPLICATION**

(71) Applicant: Huawei Technologies Co., Ltd., Shenzhen, Guangdong 518129 (CN)
(72) Inventor: HE, Guanghui, Shenzhen Guangdong 518129 (CN); QIN, Jin, Shenzhen Guangdong 518129 (CN); DANG, Pei, Shenzhen Guangdong 518129 (CN); ZHOU, Haojun, Shenzhen Guangdong 518129 (CN)
(74) Representative: Pfenning, Meinig & Partner GbR
(86) International application number: PCT/CN2011/074232
(87) International publication number: WO 2011/127860

(57) **Abstract**

Embodiments of the present invention provide a method, a server, and a system for starting an application, and belong to the field of communication technologies. The method includes: receiving identifier information sent by a terminal, where the identifier information includes information about a user identifier, an application identifier, and a terminal identifier; and selecting an appropriate virtual machine for the terminal from idle virtual machines according to the identifier information, so that after starting an application program corresponding to the application identifier, the virtual machine sets up a connection with the terminal. A unified virtual experience server is set in the embodiments of the present invention, so that all applications run in a virtual machine in a remote service, and a client only needs to receive audio and video data in a process of running an application in a virtual machine at a remote end, thereby allowing the client to receive a result of an application program run on different operating systems.

## Description

### TECHNICAL FIELD

The present invention relates to the field of communication technologies, and in particular, to a method, a server, and a system for starting an application.

### BACKGROUND

As the market share of smart phones keeps increasing, application software for smart phones emerges in large numbers, such as various input method application software, game application software, and application software for different browsers. Meanwhile, various smart mobile operating systems exist on the market, such as a Symbian system, an iOS system, a BlackBerry system, and an Android system. Application programs for different systems are independent of and incompatible with each other. There is even an incompatibility problem between applications for different versions of the same operating system. For example, some applications for android 1.5 cannot be used on the android 2.2 operating system.

In view of the incompatibility between different systems, developers of application software need to develop, according to different operating systems of a terminal, application software suitable for the operating systems of the terminal; meanwhile, terminal users, facing so many types of application software, need to repeatedly search for, download, install, try, uninstall, and then search again for application software that can satisfy requirements of terminal performance and the operating systems. It is possible that an appropriate application may be found after several or tens of such cycles of attempts. This not only makes it more difficult for the users to find an application, but also greatly increases workload of the application developers, resulting in that the application developers need to develop different versions for the same application program with respect to terminals of different models and operating systems in different versions.

### SUMMARY

In order to solve the incompatibility problem between operating systems and software versions, embodiments of the present invention provide a method, a server, and a system for starting an application. The technical solutions are as follows.

In one aspect, a method for starting an application is provided, where a unified virtual experience server is set, the unified virtual experience server is capable of starting multiple virtual machines, and each virtual machine runs a different operating system thereon, the method including:
receiving identifier information sent by a terminal, where the identifier information includes information about a user identifier, an application identifier, and a terminal identifier, and the identifier information is a basis for the terminal and the virtual experience server to set up a connection; and
selecting an appropriate virtual machine for the terminal from idle virtual machines according to the identifier information, so that after starting an application program corresponding to the application identifier, the virtual machine sets up a connection with the terminal and performs data interaction with the terminal.

In another aspect, a server is provided, where the server is capable of starting multiple virtual machines, and each virtual machine runs a different operating system thereon, the server including:
a first receiving module, configured to receive identifier information sent by a terminal, where the identifier information includes information about a user identifier, an application identifier, and a terminal identifier, and the identifier information is a basis for the terminal and the virtual experience server to set up a connection; and
a first determining module, configured to select an appropriate virtual machine for the terminal from idle virtual machines according to the identifier information, so that after starting an application program corresponding to the application identifier, the virtual machine sets up a connection with the terminal and performs data interaction with the terminal.

In another aspect, a system for starting an application is further provided. The system includes a terminal and a server, where the server is capable of starting multiple virtual machines, and each virtual machine may run a different operating system thereon.

The terminal is configured to: obtain an application list; select an application identifier to be experienced from the application list; send identifier information to the server, where the identifier information includes information about a user identifier, an application identifier, and a terminal identifier, and the identifier information is a basis for the terminal and a virtual experience server to set up a connection; receive audio and video data that is sent by the virtual machine in real time; and upload a control instruction and data input by a terminal user, thereby controlling execution of an application program on the virtual machine.

The server is configured to: receive the identifier information sent by the terminal; and select an appropriate virtual machine for the terminal from idle virtual machines, so that after starting an application program corresponding to the application identifier, the virtual machine sets up a connection with the terminal and performs data interaction with the terminal.

The beneficial effects of the technical solutions according to the embodiments of the present invention lie in that: A unified virtual experience server is set so that all applications run in a virtual machine in a remote service, where the virtual machine may have different types of operating systems; and on a client, without considering an operating system issue, an application for different operating systems can be experienced by directly clicking the application, so that the client is capable of receiving a result of an application program run on different operating systems.

### BRIEF DESCRIPTION OF DRAWINGS

FIG. 1 is a flowchart of a method for starting an application according to Embodiment 1 of the present invention;
FIG. 2 is a flowchart of a method for starting an application according to Embodiment 2 of the present invention;
FIG. 3 is a schematic diagram of an online application virtual experience system according to Embodiment 2 of the present invention;
FIG. 4 is a flowchart of messages for starting an application according to Embodiment 2 of the present invention;
FIG. 5 is a flowchart of messages for a unified virtual experience server to deploy an application program according to Embodiment 2 of the present invention;
FIG. 6 is a flowchart of messages for a unified virtual experience server to modify an application program according to Embodiment 2 of the present invention;
FIG. 7 is a flowchart of messages for a unified virtual experience server to delete an application program according to Embodiment 2 of the present invention;
FIG. 8 is a schematic diagram of a server according to Embodiment 3 of the present invention;
FIG. 9 is a schematic diagram of another server according to Embodiment 3 of the present invention; and
FIG. 10 is a schematic diagram of a system for starting an application according to Embodiment 3 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

### Embodiment 1

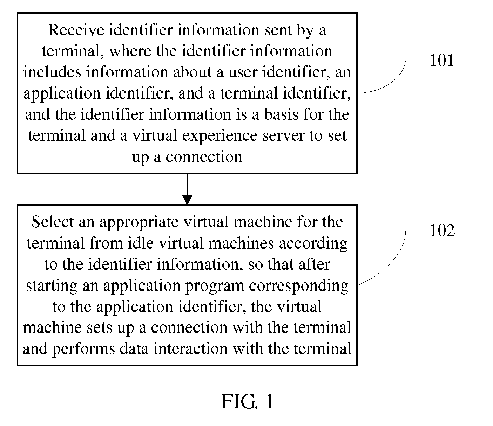

Referring to FIG. 1, this embodiment provides a method for starting an application, where a unified virtual experience server is set. The method includes:
step 101: receiving identifier information sent by a terminal, where the identifier information includes information about a user identifier, an application identifier, and a terminal identifier, and the identifier information is a basis for the terminal and a virtual experience server to set up a connection; and
step 102: selecting an appropriate virtual machine for the terminal from idle virtual machines according to the identifier information, so that after starting an application program corresponding to the application identifier, the virtual machine sets up a connection with the terminal and performs data interaction with the terminal.

The unified virtual experience server is capable of starting multiple virtual machines, and each virtual machine may run a different operating system thereon. The operating system refers to an operating system matching a version of an operating system running on the terminal.

Optionally, the selecting an appropriate virtual machine for the terminal from idle virtual machines according to the identifier information, so that the virtual machine sets up a connection with the terminal after starting an application program corresponding to the application identifier includes:
selecting, according to the identifier information, the appropriate virtual machine from virtual machines on which an application program is installed;
starting an application program corresponding to the application identifier on the virtual machine; and
sending an address of the virtual machine to the terminal and updating state information of the virtual machine, so that the terminal sets up a connection with the virtual machine according to the address of the virtual machine.

The selecting, according to the identifier information, an appropriate virtual machine from virtual machines on which an application program is installed includes:
selecting, according to the application identifier in the identifier information, from idle virtual machines, a virtual machine on which the application program is installed and which has a corresponding operating system; and
selecting, according to the user identifier, or the terminal identifier, or the user identifier and the terminal identifier, the appropriate virtual machine from virtual machines on which the application program is installed and which have the corresponding operating system.

Optionally, the selecting an appropriate virtual machine for the terminal from idle virtual machines according to the identifier information, so that the virtual machine sets up a connection with the terminal after starting an application program corresponding to the application identifier includes:
selecting an appropriate virtual machine from idle virtual machines according to the identifier information;
installing an application program corresponding to the application identifier on the virtual machine and starting the application program; and
sending an address of the virtual machine to the terminal so that the terminal sets up a connection with the virtual machine according to the address of the virtual machine.

The selecting an appropriate virtual machine from idle virtual machines according to the identifier information includes:
selecting, according to the application identifier in the identifier information, from idle virtual machines, a virtual machine on which an application program is installable and which has a corresponding operating system; and
selecting, according to the user identifier, or the terminal identifier, or the user identifier and the terminal identifier, an appropriate virtual machine from virtual machines on which the application program is installable and which have the corresponding operating system.

In this embodiment, after the virtual machine is enabled to set up the connection with the terminal after starting the application program corresponding to the application identifier, the method further includes:
sending audio and video data to the terminal in real time, and receiving a control instruction and data uploaded by the terminal for controlling running of the application program on the virtual machine.

Further, the method according to this embodiment further includes:
receiving a disconnect request sent by the terminal, and disconnecting from the terminal.

Further, in this embodiment, after the disconnecting from the terminal, the method further includes:
updating user data of the terminal user, closing the application program, and updating state information of the virtual machine.

Before the selecting an idle virtual machine for the terminal according to information about the application identifier and the terminal identifier, the method further includes:
sending the user identifier of the terminal to an authentication server so that the authentication server authenticates validity of the terminal user, and continuing to perform steps if the authentication is passed.

Further, the method according to this embodiment further includes:
receiving application program deployment information uploaded by an application developer;
obtaining an application identifier corresponding to an application program, and an application program to be deployed;
selecting, according to the application identifier, a corresponding virtual machine for the application program to be deployed; and
installing, on the virtual machine, the application program to be deployed, and updating state list information and application list information of the virtual machine.

The obtaining an application identifier corresponding to an application program, and an application program to be deployed includes:
pre-processing an application program uploaded by the application developer, where the pre-processing includes virus checking, version checking, and trial package generation; and
obtaining an application identifier of the pre-processed application program, and an application program to be deployed.

Further, the method according to this embodiment further includes:
receiving application program modification information uploaded by the application developer;
obtaining an identifier of an application program to be modified, and the application program to be modified;
determining, according to the application identifier, a virtual machine where the application program to be modified is located; and
modifying the application program on the virtual machine, and updating the state list information and the application list information of the virtual machine.

Further, the method according to this embodiment further includes:
receiving information sent by the application developer for deleting an application identifier;
obtaining an identifier of an application program to be deleted;
determining, according to the application identifier, a virtual machine where the application program to be deleted is located; and
uninstalling the application program from the virtual machine, and updating the state list information and the application list information of the virtual machine.

The beneficial effects of the method embodiment according to the embodiments of the present invention lie in that: A unified virtual experience server is set so that all applications run in a virtual machine in a remote service, where the virtual machine may have different types of operating systems; and on a client, without considering an operating system issue, an application for different operating systems can be experienced by directly clicking the application, so that the client is capable of receiving a result of an application program run on different operating systems.

### Embodiment 2

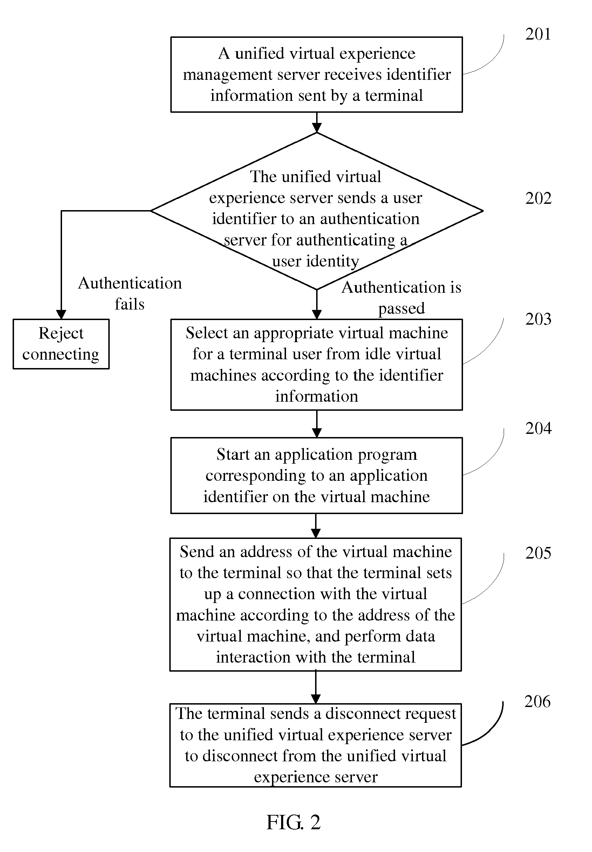

Referring to FIG. 2, an embodiment of the present invention provides a method for starting an application, including the following steps:

Step 201: A unified virtual experience management server receives identifier information sent by a terminal.

In this embodiment, the unified virtual experience server is set on a carrier side, where the unified virtual experience server may start multiple virtual machines and each virtual machine may run a different operating system for providing different application experience to a terminal user, so that the terminal user may experience and use various different applications at their own discretion by using the unified virtual experience server, without being limited by an operating system and terminal capability.

The identifier information sent by the terminal includes a user identifier of the terminal user, an application identifier selected by the terminal user, and a terminal identifier. The user identifier includes identity information of the user. The terminal identifier includes capability information of the terminal, for example, resolution of the terminal, an operation type supported by the terminal, or a sensor type supported by the terminal. The identifier information is a basis for the terminal and the unified virtual experience server to set up a connection. The unified virtual experience server may find an appropriate virtual machine according to the identifier information, and set up a connection with the terminal.

Specifically, the terminal user obtains application list information of an application developer, where the terminal user may obtain the application list information by installing a content releasing module of the application developer in advance or by opening a webpage where the application list of the application developer is located, which is not limited in the embodiment of the present invention. The content releasing module includes application list information of an application program, and is configured to release an application list that may run in a virtual experience running environment. A customer may obtain an application identifier of an application to be run from a content releasing system. The terminal selects an application to be experienced from the application list information, and sends the selected application identifier, together with the user identifier and the terminal identifier, to the unified virtual experience management server.

Step 202: The unified virtual experience server sends the user identifier to an authentication server for authenticating a user identity; and if the authentication is passed, executes step 203; otherwise, rejects connecting.

Optionally, in this embodiment, validity of the terminal user is authenticated, thereby ensuring that the unified virtual experience server is not attacked by a malicious user. A specific authentication method belongs to a scope of the prior art, which is not further described in this embodiment.

Step 203: Select an appropriate virtual machine for the terminal from idle virtual machines according to the identifier information.

In this embodiment, all applications run in a virtual machine in a remote service, where different system resources may be assigned to and different operating systems and application software may be installed on a virtual machine in operation according to different service requirements.

In this embodiment, after the validity of the terminal user is authenticated, the unified virtual experience server queries a virtual machine state information list according to the user identifier, the application identifier, and the terminal identifier, and selects an available virtual machine from idle virtual machine resources to provide a service for the terminal. The virtual machine state information list records virtual machine-relevant information in a virtual experience running environment, which specifically includes a virtual machine identifier, a running state of a virtual machine, operating system information of a virtual machine, and information (including an application identifier) about an application installed in a virtual machine.

Specifically, the unified virtual experience server selects, according to the application identifier in the identifier information, a virtual machine on which an operating system with an application is installed from idle virtual machines, and selects, according to the user identifier, or the terminal identifier, or the user identifier and the terminal identifier, an appropriate virtual machine from virtual machines on which the operating system with the application is installed. A specific method for selecting a virtual machine according to an application identifier and a user identifier is that, the unified virtual experience server finds, according to the application identifier, an operating system where the application is installed; queries a virtual machine list defined in advance by the user; and then finds the virtual machine defined in advance by the user from virtual machines on which the operating system with the application is installed. A specific method for selecting a virtual machine according to an application identifier and a terminal identifier is that, the unified virtual experience server finds, according to the application identifier, a virtual server on which an application program is installed; then finds, according to capability of the terminal, a virtual server that can satisfy the capability of the terminal; and finally determines an available virtual machine to serve the terminal. A method for selecting a virtual machine according to an application identifier, a terminal identifier, and a user identifier is first finding an operating system where the application is installed, and then selecting an appropriate virtual machine according to the user identifier and the terminal identifier.

In this embodiment, an application program may be installed on a virtual machine in advance, and when a user selects the application program, the application program on the virtual machine may be directly started. Optionally, it is also allowed not to install the application program in advance, and when a terminal user selects the application program, the unified virtual experience server selects an appropriate virtual machine from idle virtual machines according to the identifier information, and then installs the application program selected by the terminal user. Specifically, from the idle virtual machines, a virtual machine which has a corresponding operating system and on which the application program is installed is selected according to the application identifier in the identifier information; and from virtual machines which have the corresponding operating system and on which the application program is installed, an appropriate virtual machine is selected according to the user identifier, or the terminal identifier, or the user identifier and the terminal identifier. A specific implementation method for selecting an appropriate virtual machine according to a user identifier, or a terminal identifier, or a user identifier and a terminal identifier is the same as the method for finding a virtual machine on which the application program is installed in advance, which is not further described in this embodiment.

Step 204: Start an application program corresponding to the application identifier on the virtual machine.

In this embodiment, after the appropriate virtual machine is found, the unified virtual experience server triggers a start command of the application program on the virtual machine, thereby automatically starting the application program on the virtual machine.

Further, in this embodiment, if the virtual machine selected by the unified virtual experience management server is not in a started state, the virtual machine is started first, and then the corresponding application program on the virtual machine is started.

Step 205: Send an address of the virtual machine to the terminal so that the terminal sets up a connection with the virtual machine according to the address of the virtual machine; and perform data interaction with the terminal.

In this embodiment, all applications run in a virtual machine in a remote service, and the virtual machine may have different types of operating systems. The terminal logs in by using the address information after receiving the address of the virtual machine; the unified virtual experience server then transfers an interface of the application program to the terminal; and the terminal only needs to receive audio and video data that is run on the remote virtual machine, so that the terminal may receive a result of the application program run on different operating systems, and may perform specific interaction with the virtual machine by uploading a control instruction and data.

Step 206: The terminal sends a disconnect request to the unified virtual experience server to disconnect from the unified virtual experience server.

In this embodiment, when the terminal user wants to stop performing an operation on the application, the terminal sends a disconnect request to the unified virtual experience server to disconnect therefrom.

Further, the unified virtual experience server, after disconnecting from the terminal, closes the application program on the virtual machine, updates the virtual machine state information list, and modifies the state information of the virtual machine to an idle state. Optionally, before the application program on the virtual machine is closed, user data of the terminal user may be updated, so that the operation may be continued when the user uses the application program for the next time.

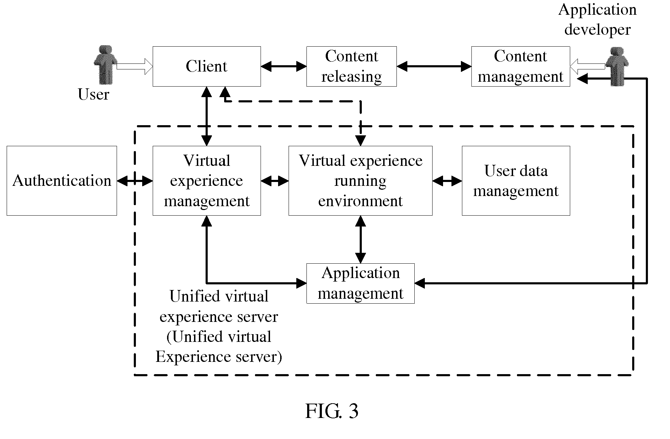

Further, in this embodiment, specifically, referring to FIG. 3, the unified virtual experience server may include a virtual experience management module, a user data management module, an application management module, and a virtual experience running environment management module. The unified virtual experience server, together with a client (terminal), a content releasing module, a content management module, and an authentication module, form an online virtual experience system. The virtual experience management module manages a virtual running environment, including creating, deleting, and starting a virtual machine, updating a virtual machine state, and scheduling idle virtual machines and so on, where a corresponding operation is completed mainly according to relevant content in a virtual machine state information list. The virtual experience running environment module is a virtual machine in operation, where according to different service requirements, different system resources are assigned and different operating systems and application software are installed. The application management module is configured to perform an operation, such as adding, deleting, and modifying, on an application in a virtual machine, and after receiving a content synchronization message from the content management module, perform a corresponding processing on an application. The user information management module stores personal data information when a user runs an application, so as to provide a personalized service.

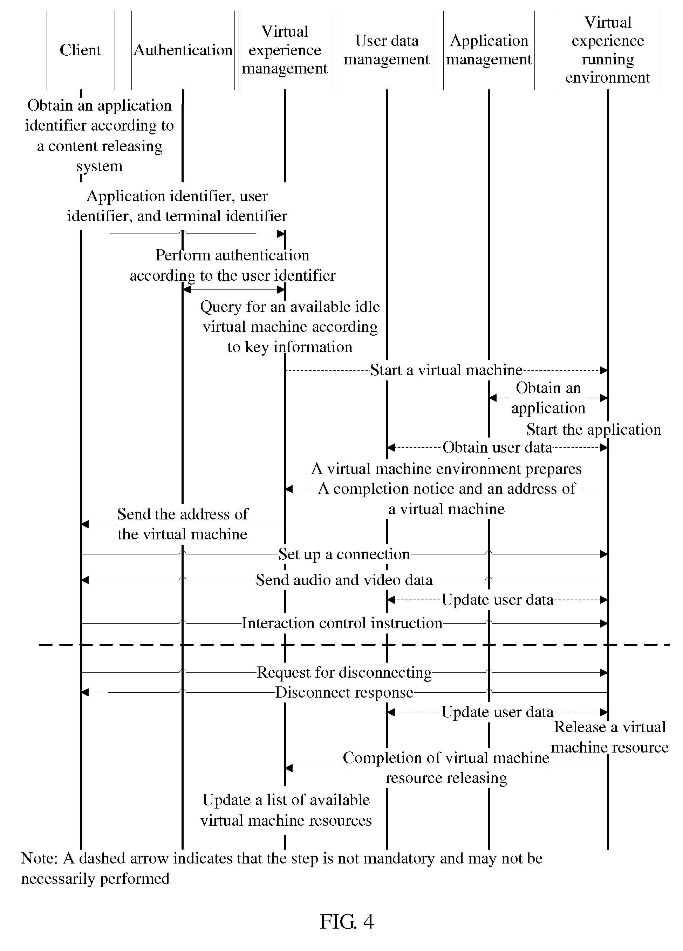

According to the online virtual experience system, a specific procedure of implementing steps 201 to 206 by using the modules mentioned above is shown in FIG. 4.
1. A terminal obtains an application list from a content releasing module, and selects an identifier of an application to be experienced.
2. The terminal sends the application identifier, a user identifier, and a terminal identifier to a virtual experience management module.
3. The virtual experience management module sends the user identifier to an authentication module for authenticating validity of the user.
4. After authentication of the validity of the user is passed, the virtual experience management module selects an available virtual machine from an idle virtual machine resource according to the application identifier, the user identifier, and the terminal identifier.
5. If the corresponding virtual machine is not started, start the virtual machine.
6. A virtual experience running environment starts a corresponding application on the virtual machine, and if necessary, loads user data.
7. The virtual experience running environment module sends an address of the virtual machine to the virtual experience management module.
8. The virtual experience management module sends the address of the virtual machine to a client and updates a virtual machine state information list.
9. The terminal sets up a connection directly with the virtual machine in the virtual experience running environment module according to the address of the virtual machine.
10. The terminal receives audio and video data sent by the virtual machine, and uploads an interaction control instruction and data to perform an operation.
11. After experiencing, the terminal sends a disconnect request to disconnect from the virtual machine.
12. The virtual experience running environment module connects to a user data management module to update user data.
13. The virtual experience running environment module releases a corresponding resource (closing an application program, and may further close the virtual machine).
14. The virtual experience running environment module connects to the virtual experience management module to update the virtual machine state information list.

Further, in this embodiment, when developing a new application program, an application developer always releases the new application program to a content management system, and the unified virtual experience server deploys and installs the new application program after receiving a signal of releasing an application program, which includes:
1) receiving, by the unified virtual experience server, application program deployment information uploaded by the application developer;
2) obtaining an application identifier corresponding to an application program, and an application program to be deployed;
3) selecting, according to the application identifier, a corresponding virtual machine for the application program to be deployed; and
4) installing, on the virtual machine, the application program to be deployed, and updating state list information and application list information of the virtual machine.

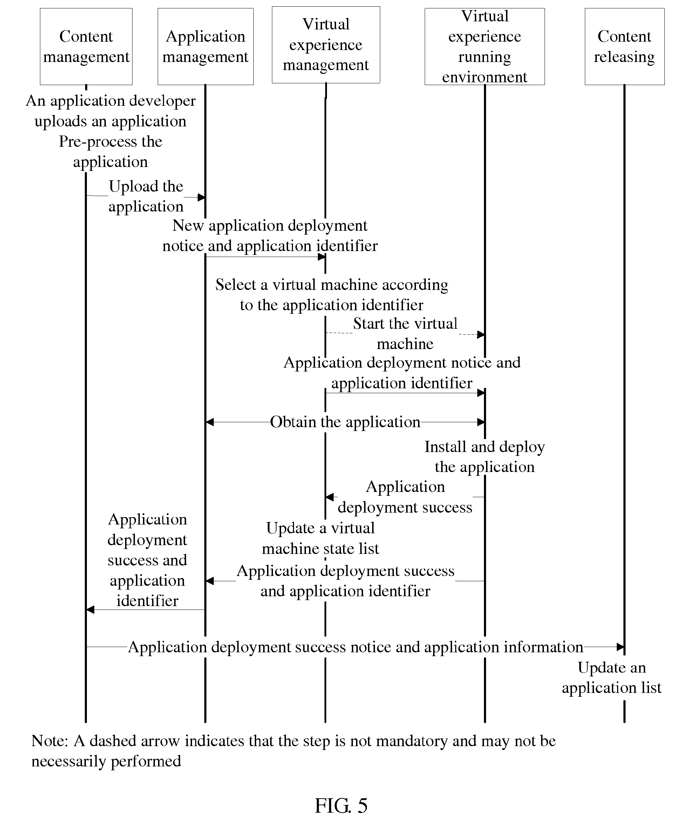

Specifically, steps (1) to (4) mentioned above may be completed by using the modules in the unified virtual experience server. Referring to FIG. 5, a procedure of deploying an application is as follows.
1. An application developer uploads an application.
2. Perform pre-processing (virus checking, version checking, trial package generation, and the like) on the uploaded application in a content management module.
3. Upload the pre-processed application to an application management module.
4. The application management module sends a signal indicating an arrival of a new application and a corresponding application identifier to a virtual experience management module after receiving the new application.
5. The virtual experience management module determines a type of a virtual machine operating system according to the application identifier, and selects an appropriate virtual machine.
6. The virtual experience management module sends an application deployment notice and the application identifier to a virtual machine in a virtual experience running environment.
7. The virtual experience running environment module sends a request to an application management system for obtaining a corresponding new application.
8. The virtual experience running environment module deploys the new application, which specifically includes copying and installing the application to a specific virtual experience running environment.
9. The virtual experience running environment module sends a deployment success message and the application identifier to the virtual experience management module after the new application is deployed successfully.
10. The virtual experience management module updates a virtual machine state information list.
11. The virtual experience running environment module also needs to send a deployment success message and the application identifier to the application management module after the successful deployment.
12. The application management module sends a deployment success message and the application identifier to the content management system.
13. The content management module sends an application deployment success message and application-related information to the content releasing system.
14. The content releasing module updates a list of available applications.

In this embodiment, the application developer may also modify an application program on the unified virtual experience server, where a modifying method includes:
1) receiving, by the unified virtual experience server, application program modification information uploaded by the application developer;
2) obtaining an identifier of an application program needing to be modified, and the application program needing to be modified;
3) determining a virtual machine where the application program needing to be modified is located; and
4) modifying the application program on the virtual machine, and updating the state list information and the application list information of the virtual machine.

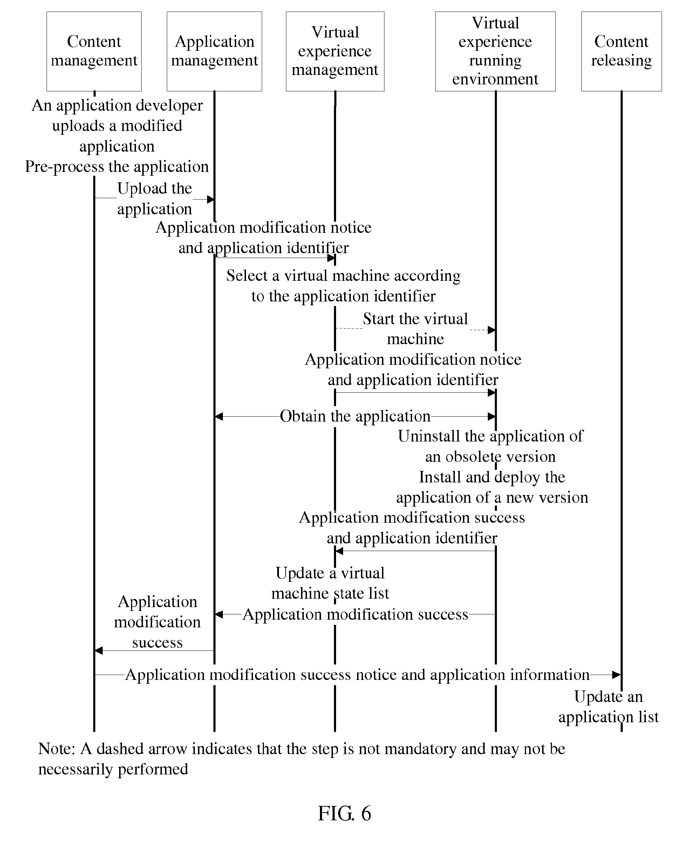

In this embodiment, referring to FIG. 6, a procedure of modifying an application program by using the modules in the unified virtual experience server specifically includes the following.
1. An application developer uploads an application.
2. Perform pre-processing (virus checking, version checking, trial package generation, and the like) on the uploaded application in a content management module.
3. Upload the pre-processed application to an application management module.
4. The application management module sends an application modification signal and a corresponding application identifier to a virtual experience management module after receiving the new application.
5. The virtual experience management module determines a type of a virtual machine operating system according to the application identifier, and selects an appropriate virtual machine.
6. The virtual experience management module sends an application modification notice and the application identifier to a virtual machine in a virtual experience running environment.
7. The virtual experience running environment module sends a request to an application management system for obtaining an application needing to be modified.
8. The virtual experience running environment module modifies the application, which specifically includes deleting a just application program, installing a new application program, upgrading an application, and the like.
9. The virtual experience running environment module sends a modification success message and the application identifier to the virtual experience management module after modifying the application successfully.
10. The virtual experience management module updates a virtual machine state information list.
11. The virtual experience running environment module also needs to send a modification success message and the application identifier to the application management module after the successful deployment.
12. The application management module sends a modification success message and the application identifier to the content management system.
13. The content management module sends an application modification success message and application-related information to the content releasing system.
14. The content releasing module updates a list of available applications.

In this embodiment, the application developer may also delete an application program on the unified virtual experience server, where a deleting method includes:
1) receiving, by the unified virtual experience server, information sent by the application developer for deleting an application identifier;
2) obtaining an identifier of an application program needing to be deleted;
3) determining a virtual machine where the application program needing to be deleted is located; and
4) uninstalling the application program from the virtual machine, and updating the state list information and the application list information of the virtual machine.

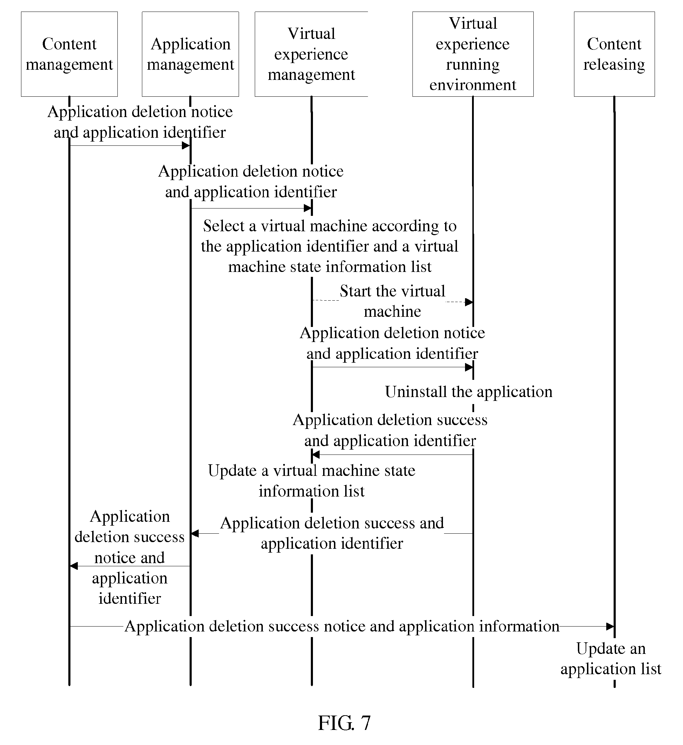

In this embodiment, after an application program is deleted, the content releasing module updates a list of application programs, so that a terminal user cannot find the application program in the list of application programs. Specifically, referring to FIG. 7, a procedure of deleting an application program by using the modules in the unified virtual experience server specifically includes the following.
1. An application developer sends a deletion signal and a corresponding application identifier to an application management module.
2. The application management module sends an application deletion signal and the corresponding application identifier to a virtual experience management module.
3. The virtual experience management module selects a virtual machine according to the application identifier and virtual machine state information.
4. The virtual experience management system sends an application deletion notice and the application identifier to a virtual machine in a virtual experience running environment module.
5. The virtual experience running environment module uninstalls and deletes the application.
6. The virtual experience running environment module sends a deletion success message and the application identifier to the virtual experience management module after deleting the application program successfully.
7. The virtual experience management module updates a virtual machine state information list.
8. The virtual experience running environment module also needs to send a deletion success message and the application identifier to the application management module after the successful deletion.
9. The application management module sends the deletion success message and the application identifier to the content management module.
10. The content management module sends the application deletion success message and the application identifier to the content releasing system.
11. The content releasing module updates an application list.

This embodiment presents specific operations for uploading and installing an application program on a virtual machine. However, some green software requires no installation. In other words, a case exists where it is only necessary to deploy an application in an application management module, and a virtual machine directly loads the application from the application management module after receiving an ID and a message for running an application. In this way, no specific installation, modification, or deletion is required on the virtual machine end. That is, the application management module directly updates a virtual machine state information list after receiving a corresponding application program and an application ID.

The beneficial effects of the method embodiment in the embodiments of the present invention lie in that: A unified virtual experience server is set, so that all applications run in a virtual machine in a remote service, where the virtual machine may have different types of operating systems; and a client only needs to receive audio and video data run on a virtual machine at a remote end. A user does not need to consider an operating system issue, and can experience an application of different operating systems by directly clicking the application, so that the client is capable of receiving a result of an application program run on different operating systems, and is capable of performing specific interaction with the virtual machine by uploading a control instruction, thereby achieving an objective of experiencing different online applications crossing operating systems.

### Embodiment 3

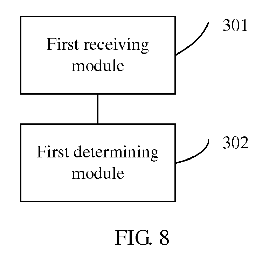

Referring to FIG. 8, an embodiment of the present invention provides a server. The server is capable of starting multiple virtual machines where each virtual machine may run a different operating system, and includes a first receiving module 301, a first determining module 302, a starting module 303, and a connecting module 304.

The first receiving module is configured to receive identifier information sent by a terminal, where the identifier information includes information about a user identifier, an application identifier, and a terminal identifier, and the identifier information is a basis for the terminal and a virtual experience server to set up a connection.

The first determining module is configured to select an appropriate virtual machine for the terminal from idle virtual machines according to the identifier information, so that after starting an application program corresponding to the application identifier, the virtual machine sets up a connection with the terminal and performs data interaction with the terminal.

The first determining module is specifically configured to:
select, according to the identifier information, an appropriate virtual machine from virtual machines on which an application program is installed;
start an application program corresponding to the application identifier on the virtual machine; and
send an address of the virtual machine to the terminal and update state information of the virtual machine, so that the terminal sets up a connection with the virtual machine according to the address of the virtual machine.

The first determining module is specifically configured to:
select an appropriate virtual machine from idle virtual machines according to the identifier information;
install an application program corresponding to the application identifier on the virtual machine and start the application program; and
send an address of the virtual machine to the terminal, so that the terminal sets up a connection with the virtual machine according to the address of the virtual machine.

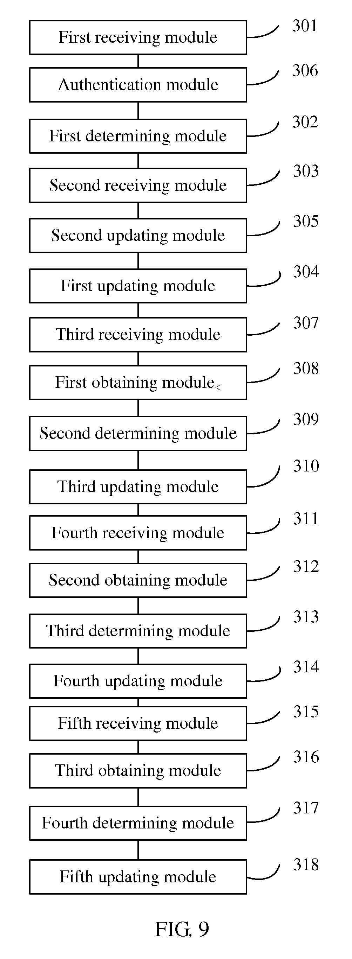

Referring to FIG. 9, furthermore, the server according to this embodiment further includes:
a second receiving module 305, configured to receive a disconnect request sent by the terminal, and disconnect from the terminal.

Referring to FIG. 9, furthermore, the server according to this embodiment further includes:
a first updating module 306, configured to update user data of the terminal user after disconnecting from the terminal; and
a second updating module 307, configured to close the application program and update the state information of the virtual machine.

Referring to FIG. 9, furthermore, the server according to this embodiment further includes:
an authentication module 308, configured to send, before the first determining module selects an idle virtual machine for the terminal, the user identifier of the terminal to an authentication server, so that the authentication server authenticates validity of the terminal user; and continue to perform steps if the authentication is passed.

Referring to FIG. 9, furthermore, the server according to this embodiment further includes:
a third receiving module 309, configured to receive application program deployment information uploaded by an application developer;
a first obtaining module 310, configured to obtain an application identifier corresponding to an application program, and an application program to be deployed;
a second determining module 311, configured to select, according to the application identifier, a corresponding virtual machine for the application program to be deployed; and
a third updating module 312, configured to install, on the virtual machine, the application program to be deployed, and update state list information and application list information of the virtual machine.

Referring to FIG. 9, furthermore, the server according to this embodiment further includes:
a fourth receiving module 313, configured to receive application program modification information uploaded by the application developer;
a second obtaining module 314, configured to obtain an identifier of an application program to be modified, and the application program to be modified;
a third determining module 315, configured to determine, according to the application identifier, a virtual machine where the application program to be modified is located; and
a fourth updating module 316, configured to modify the application program on the virtual machine, and update the state list information and the application list information of the virtual machine.

Referring to FIG. 9, furthermore, the server according to this embodiment further includes:
a fifth receiving module 317, configured to receive information sent by the application developer for deleting an application identifier;
a third obtaining module 318, configured to obtain an identifier of an application program to be deleted;
a fourth determining module 319, configured to determine, according to the application identifier, a virtual machine where the application program to be deleted is located; and
a fifth updating module 320, configured to uninstall the application program from the virtual machine, and update the state list information and the application list information of the virtual machine.

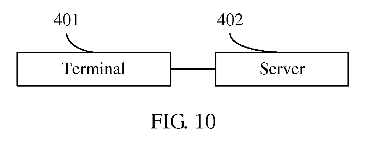

Referring to FIG. 10, a system for starting an application includes a terminal 401 and a server 402, where the server is capable of starting multiple virtual machines, and each virtual machine may run a different operating system thereon.

The terminal 401 is configured to: obtain an application list; select an application identifier to be experienced from the application list; send identifier information to the server, where the identifier information includes information about a user identifier, an application identifier, and a terminal identifier, and the identifier information is a basis for the terminal and a virtual experience server to set up a connection; receive audio and video data that is sent by the virtual machine in real time; and upload a control instruction and data input by a terminal user, thereby controlling running of an application program on the virtual machine.

The server 402 is configured to: receive the identifier information sent by the terminal; and select an appropriate virtual machine for the terminal from idle virtual machines, so that after starting an application program corresponding to the application identifier, the virtual machine sets up a connection with the terminal and performs data interaction with the terminal.

The beneficial effects of the apparatus according to the embodiments of the present invention lie in that: A unified virtual experience server is set so that all applications run in a virtual machine in a remote service, where the virtual machine may have different types of operating systems; and on a client, without considering an operating system issue, an application for different operating systems can be experienced by directly clicking the application, so that the client is capable of receiving a result of an application program run on different operating systems.

The server and the system according to this embodiment may specifically belong to the same concept as the method embodiment, and for specific implementation processes thereof, refer to the method embodiment for details, which is not further described herein.

All or a part of the technical solutions according to the embodiments of the present invention may be implemented by a program instructing relevant hardware. The program may be stored in a readable storage medium. The storage medium includes various mediums capable of storing program code such as a ROM, a RAM, a magnetic disk, or an optical disk.

The above are merely exemplary embodiments of the present invention, but are not intended to limit the present invention. All modifications, equivalent replacements, and improvements made without departing from the spirit and principle of the present invention shall fall within the scope of the present invention.

## Claims

1. A method for starting an application, wherein a unified virtual experience server is set, the unified virtual experience server is capable of starting multiple virtual machines, and each virtual machine runs a different operating system thereon, the method comprising:
receiving identifier information sent by a terminal, wherein the identifier information comprises information about a user identifier, an application identifier, and a terminal identifier, and the identifier information is a basis for the terminal and the virtual experience server to set up a connection; and
selecting an appropriate virtual machine for the terminal from idle virtual machines according to the identifier information, so that after starting an application program corresponding to the application identifier, the virtual machine sets up a connection with the terminal and performs data interaction with the terminal.

2. The method according to claim 1, wherein the selecting an appropriate virtual machine for the terminal from idle virtual machines according to the identifier information, so that after starting an application program corresponding to the application identifier, the virtual machine sets up a connection with the terminal and performs data interaction with the terminal comprises:
selecting, according to the identifier information, the appropriate virtual machine from virtual machines on which an application program is installed;
starting an application program corresponding to the application identifier on the virtual machine; and
sending an address of the virtual machine to the terminal and updating state information of the virtual machine so that the terminal sets up a connection with the virtual machine according to the address of the virtual machine, and performing data interaction with the terminal.

3. The method according to claim 2, wherein the selecting, according to the identifier information, the appropriate virtual machine from the virtual machines on which an application program is installed comprises:
selecting, according to the application identifier in the identifier information, from idle virtual machines, a virtual machine(s) on which the application program is installed and which has a corresponding operating system; and
selecting, according to the user identifier, or the terminal identifier, or the user identifier and the terminal identifier, the appropriate virtual machine from the virtual machine(s) on which the application program is installed and which have the corresponding operating system.

4. The method according to claim 1, wherein the selecting an appropriate virtual machine for the terminal from idle virtual machines according to the identifier information, so that after starting an application program corresponding to the application identifier, the virtual machine sets up a connection with the terminal and performs data interaction with the terminal comprises:
selecting an appropriate virtual machine from idle virtual machines according to the identifier information;
installing an application program corresponding to the application identifier on the virtual machine and starting the application program; and
sending an address of the virtual machine to the terminal so that the terminal sets up a connection with the virtual machine according to the address of the virtual machine, and performing data interaction with the terminal.

5. The method according to claim 4, wherein the selecting an appropriate virtual machine from idle virtual machines according to the identifier information comprises:
selecting, according to the application identifier in the identifier information, from idle virtual machines, a virtual machine(s) on which an application program is installable and which has a corresponding operating system; and
selecting, according to the user identifier, or the terminal identifier, or the user identifier and the terminal identifier, an appropriate virtual machine from the virtual machine(s) on which the application program is installable and which have the corresponding operating system.

6. The method according to claim 1, wherein the performing data interaction with the terminal comprises:
sending audio and video data to the terminal in real time, and receiving a control instruction and data uploaded by the terminal for controlling running of the application program.

7. The method according to claim 1, further comprising:
receiving a disconnect request sent by the terminal, and disconnecting from the terminal.

8. The method according to claim 7, wherein after the disconnecting from the terminal, the method further comprises:
updating user data of the terminal user, closing the application program, and updating state information of the virtual machine.

9. The method according to claim 1, 7, or 8, wherein before the selecting an appropriate virtual machine for the terminal from idle virtual machines according to the identifier information, the method further comprises:
sending the user identifier of the terminal to an authentication server so that the authentication server authenticates validity of the terminal user, and continuing to perform steps if the authentication is passed.

10. The method according to claim 1, 7, 8, or 9, further comprising:
receiving application program deployment information uploaded by an application developer;
obtaining an application identifier corresponding to an application program, and an application program to be deployed;
selecting, according to the application identifier, a corresponding virtual machine for the application program to be deployed; and
installing, on the virtual machine, the application program to be deployed, and updating state list information and the application list information of the virtual machine.

11. The method according to claim 10, wherein the obtaining an application identifier corresponding to an application program, and an application program to be deployed comprises:
pre-processing an application program uploaded by the application developer, wherein the pre-processing comprises virus checking, version checking, and trial package generation; and
obtaining an application identifier of the pre-processed application program, and an application program to be deployed.

12. The method according to claim 1, 7, 8, 9, or 10, further comprising:
receiving application program modification information uploaded by the application developer;
obtaining an identifier of an application program to be modified, and the application program to be modified;
determining, according to the application identifier, a virtual machine where the application program to be modified is located; and
modifying the application program on the virtual machine, and updating the state list information and the application list information of the virtual machine.

13. The method according to claim 1, 7, 8, 9, 10, or 12, further comprising:
receiving information sent by the application developer for deleting an application identifier;
obtaining an identifier of an application program to be deleted;
determining, according to the application identifier, a virtual machine where the application program to be deleted is located; and
uninstalling the application program from the virtual machine, and updating the state list information and the application list information of the virtual machine.

14. A server, wherein the server is capable of starting multiple virtual machines, and each virtual machine runs a different operating system thereon, the server comprising:
a first receiving module, configured to receive identifier information sent by a terminal, wherein the identifier information comprises information about a user identifier, an application identifier, and a terminal identifier, and the identifier information is a basis for the terminal and the virtual experience server to set up a connection; and
a first determining module, configured to select an appropriate virtual machine for the terminal from idle virtual machines according to the identifier information, so that after starting an application program corresponding to the application identifier, the virtual machine sets up a connection with the terminal and performs data interaction with the terminal.

15. The server according to claim 14, wherein the first determining module is specifically configured to:
select, according to the identifier information, an appropriate virtual machine from virtual machines on which an operating system with the application is installed;
start an application program corresponding to the application identifier on the virtual machine; and
send an address of the virtual machine to the terminal and update state information of the virtual machine, so that the terminal sets up a connection with the virtual machine according to the address of the virtual machine.

16. The server according to claim 14, wherein the first determining module is specifically configured to:
select an appropriate virtual machine from idle virtual machines according to the identifier information;
install an application program corresponding to the application identifier on the virtual machine and start the application program; and
send an address of the virtual machine to the terminal, so that the terminal sets up a connection with the virtual machine according to the address of the virtual machine.

17. The server according to claim 14, further comprising:
a second receiving module, configured to receive a disconnect request sent by the terminal, and disconnect from the terminal.

18. The server according to claim 17, further comprising:
a first updating module, configured to update user data of the terminal user after disconnecting from the terminal; and
a second updating module, configured to close the application program and update state information of the virtual machine.

19. The server according to claim 14, 17, or 18, further comprising:
an authentication module, configured to send the user identifier of the terminal to an authentication server before the first determining module selects an idle virtual machine for the terminal, so that the authentication server authenticates validity of the terminal user, and continue to perform steps if the authentication is passed.

20. The server according to claim 14, 17, 18, or 19, further comprising:
a third receiving module, configured to receive application program deployment information uploaded by an application developer;
a first obtaining module, configured to obtain an application identifier corresponding to an application program, and an application program to be deployed;
a second determining module, configured to select, according to the application identifier, a corresponding virtual machine for the application program to be deployed; and
a third updating module, configured to install, on the virtual machine, the application program to be deployed, and update state list information and application list information of the virtual machine.

21. The server according to claim 14, 17, 18, 19, or 20, further comprising:
a fourth receiving module, configured to receive application program modification information uploaded by the application developer;
a second obtaining module, configured to obtain an identifier of an application program to be modified, and the application program to be modified;
a third determining module, configured to determine, according to the application identifier, a virtual machine where the application program to be modified is located; and
a fourth updating module, configured to modify the application program on the virtual machine, and update the state list information and the application list information of the virtual machine.

22. The server according to claim 14, 17, 18, 19, 20, or 21, further comprising:
a fifth receiving module, configured to receive information sent by the application developer for deleting an application identifier;
a third obtaining module, configured to obtain an identifier of an application program to be deleted;
a fourth determining module, configured to determine, according to the application identifier, a virtual machine where the application program to be deleted is located; and
a fifth updating module, configured to uninstall the application program from the virtual machine, and update the state list information and the application list information of the virtual machine.

23. A system for starting an application, comprising a terminal and a server, wherein the server is capable of starting multiple virtual machines, and each virtual machine runs a different operating system thereon;
the terminal is configured to: obtain an application list; select an application identifier to be experienced from the application list; send identifier information to the server, wherein the identifier information comprises information about a user identifier, an application identifier, and a terminal identifier, and the identifier information is a basis for the terminal and a virtual experience server to set up a connection; receive audio and video data that is sent by the virtual machine in real time; and upload a control instruction and data input by a terminal user, thereby controlling execution of an application program on the virtual machine; and
the server is configured to: receive the identifier information sent by the terminal; and select an appropriate virtual machine for the terminal from idle virtual machines, so that after starting an application program corresponding to the application identifier, the virtual machine sets up a connection with the terminal and performs data interaction with the terminal.
